# EUROPÄISCHE PATENTSCHRIFT

(11) **EP 1 126 193 B1**
(45) Veröffentlichungstag und Bekanntmachung des Hinweises auf die Patenterteilung: **04.08.2004**
(21) Anmeldenummer: 01103469.1
(22) Anmeldetag: 14.02.2001
(51) Int. Cl.: F16H 25/22

(54) **Wälzkörpergewindetrieb und Verfahren zu dessen Montage**
Rolling element screw drive and assembly method thereof
Entraînement fileté à éléments de roulement et sa méthode de montage

(30) Priorität: 15.02.2000 DE 10006536
(43) Veröffentlichungstag der Anmeldung: 22.08.2001
(73) Patentinhaber: Rexroth Star GmbH, 97424 Schweinfurt (DE)
(72) Erfinder: Huppmann, Erich, 97502 Sömmersdorf (DE)
(74) Vertreter: Herzog, Markus, Dipl.-Phys. Dr.

(56) Entgegenhaltungen:
- DE-A- 2 135 812
- PATENT ABSTRACTS OF JAPAN vol. 1998, no. 02, 30. Januar 1998 (1998-01-30) -& JP 09 264395 A (NTN CORP), 7. Oktober 1997 (1997-10-07)

## Beschreibung

Die Erfindung betrifft einen Wälzkörpergewindetrieb, insbesondere einen Kugelgewindetrieb, umfassend eine Gewindespindel mit einer Spindelachse, und eine auf der Gewindespindel laufende Doppelmutter mit zwei voneinander gesondert ausgebildeten Einzelmuttern, welche in Richtung der Spindelachse im Wesentlichen starr miteinander verbunden sind, wobei die beiden Einzelmuttern zur Einstellung eines gewünschten Spiels bzw. einer gewünschten Vorspannung bezüglich der Gewindespindel kontinuierlich relativ zueinander um die Spindelachse verdrehbar und in einer beliebigen dem gewünschten Spiel bzw. der gewünschten Vorspannung entsprechenden Relativdrehstellung festlegbar sind.

Derartige Wälzkörpergewindetriebe werden beispielsweise zum schnellen und genauen Positionieren von Werkzeug- und Werkstückträgern sowie zum Verfahren derselben mit definierten Geschwindigkeiten eingesetzt. Dabei wird eine Drehbewegung der Gewindespindel in eine Linearbewegung der geführten Doppelmutter umgesetzt. Um bei der Umkehr der Bewegungsrichtung der Doppelmutter möglichst hohen Genauigkeitsanforderungen genügen zu können, ist es erforderlich, dass die Doppelmutter auf der Spindel möglichst spielfrei angeordnet ist. Hierzu werden die beiden Muttern bei der Montage auf der Spindel so weit aufeinander zugedreht, bis sie sich mit ihren einander zugewandten Stirnflächen aneinander abstützen. Weiteres Verdrehen der Muttern führt dazu, dass die Wälzkörper an einander entgegengesetzten Flankenflächen der Laufbahnen der Muttern anliegen, was letztenendes die gewünschte Vorspannung der beiden Muttern relativ zur Gewindespindel und die im Wesentlichen spielfreie Führung der Doppelmutter auf der Gewindespindel zur Folge hat.

Ein gattungsgemäßerWälzkörpergewindetrieb, d.h.ein Wälzkörpergewindetrieb, bei welchem das Spiel bzw. die Vorspannung der beiden Einzelmuttern bezüglich der Gewindespindel wie bei dem erfindungsgemäßen Wälzkörpergewindetrieb stufenlos eingestellt werden kann, ist beispielsweise aus der DE-OS 21 35 812 bekannt. In einem mit einer der Einzelmuttern drehfest verbundenen Zwischenenelement des bekannten Wälzkörpergewindetriebs ist ein Schraubbolzen aufgenommen, der mit einem an der anderen Einzelmutter drehfest angebrachten Teil in Schraubeingriff steht. Der so gebildete Schneckentrieb gestattet eine stufenlose Verdrehung der beiden Einzelmuttern relativ zueinander um die Spindelachse. Nachteilig ist an dieser Ausführung zum einen, dass für den Schneckentrieb relativ viel Bauraum vorgesehen werden muss, insbesondere in radialer Richtung. Nachteilig ist aber auch, dass trotz der Schneckentrieben inhärenten Selbsthemmung die eingestellte gewünschte Vorspannung sich in unerwünschter Weise selbsttätig wieder verstellen kann, beispielsweise infolge von Vibrationen, welche zu einem Verdrehen des Schraubbolzens des Schneckentriebs führen.

Ein ähnlich aufgebauter Wälzkörpergewindetrieb ist ferner aus der DE-OS 23 49 958 bekannt.

Aus der DE-OS 23 49 958 und der DE 30 38 774 C2 sowie der hierzu korrespondierenden EP 0 049 903 B1 sind darüber hinaus gattungsgemäße Wälzkörpergewindetriebe bekannt, bei welchen ein Zwischenelement zur Verhinderung einer Relativverdrehung der beiden Muttern sowohl mit der einen Einzelmutter als auch mit der anderen Einzelmutter in Reibeingriff steht. Somit die Reibungskräfte bereits bei der Montage, d.h. bei der Relativverdrehung der beiden Einzelmuttern zur Einstellung der gewünschten Vorspannung bzw. des gewünschten Spiels, überwunden werden. Dies erschwert die exakte Einstellung des Spiels bzw. der Vorspannung auf den gewünschten Wert beträchtlich.

Des weiteren sind aus der DE 24 53 635 C3, der DE-OS 25 33 996 und der DE 29 40 762 C2 Wälzkörpergewindetriebe bekannt, bei welchen die beiden Einzelmuttern nicht stufenlos, sondern lediglich in vorbestimmten Winkelschritten relativ zueinander verdreht und fixiert werden können.

Bei dem aus dem DE-GM 77 08 184 bekannten Wälzkörpergewindetrieb ist eine stufenlose Verdrehung der beiden Einzelmuttern nur in einem sehr engen Winkelbereich möglich. Zur Einstellung einer gewünschten Vorspannung bzw. eines gewünschten Spiels bezüglich der Gewindespindel ist es daher zusätzlich erforderlich, zwischen den beiden Einzelmuttern Distanzstücke vorzusehen, deren Dicke auf die gewünschte Vorspannung bzw. das gewünschte Spiel abgestimmt sein muss. Bei der Montage ist es daher auch bei Einsatz erfahrenen Personals üblicherweise erforderlich, die Distanzstücke mehrmals auszuwechseln, bis dasjenige Distanzstück mit der für die gewünschte Vorspannung bzw. das gewünschte Spiel passenden Dicke gefunden ist. Die Montage des aus dem DE-GM 77 08 184 bekannten Wälzkörpergewindetriebs ist daher umständlich und zeitaufwendig.

Gemäß der DE 37 00 693 C2 wird ein zwischen den beiden aneinander anliegenden Stirnflächen der Einzelmuttern von Ringnuten und Einschnitten gebildeter Hohlraum zur Bildung des Zwischenelements mit Vergussmasse gefüllt. Die der gewünschten Vorspannung bzw. dem gewünschten Spiel entsprechende Relativverdrehungsstellung der beiden Einzelmuttern muss daher bis zum vollständigen Aushärten der Vergussmasse aufrechterhalten werden.

Aus der DE 42 08 126 A1 ist ein Wälzkörpergewindetrieb bekannt, bei welchem die beiden Einzelmuttern über ein in Richtung der Spindelachse federnd nachgiebiges Zwischenelement miteinander verbunden sind. Eine derartige axial federnde Anordnung hat den Nachteil, dass sich die beiden Einzelmuttern dann, wenn auf eine der Einzelmuttern eine die Federkraft übersteigende Kraft ausgeübt wird, aufeinander zu bewegen können, wodurch die gewünschte Vorspannung verloren geht.

Darüber hinaus sei noch auf die DE 32 07 566 A1 verwiesen, bei welcher nach dem Einstellen der gewünschten Vorspannung der beiden Einzelmuttern in deren gemeinsamen Kontaktbereich eine Aufnahmebohrung für einen radialen Sperrbolzen eingebracht wird, welcher die Aufrechterhaltung der erzielten Vorspannung sichert.

Es ist daher Aufgabe der Erfindung, einen Wälzkörpergewindetrieb der eingangs genannten Art anzugeben, der bei einfachem konstruktivem Aufbau und einfachem Montageablauf ohne weiteres eine stufenlose und exakte Einstellung des Spiels bzw. der Vorspannung der Einzelmuttern bezüglich der Schraubspindel auf einen gewünschten Wert ermöglicht.

Diese Aufgabe wird erfindungsgemäß durch einen Wälzkörpergewindetrieb der eingangs genannten Art gelöst, bei welchem eine mit einer ersten der beiden Einzelmuttern verbundene, zwischen den beiden Einzelmuttern angeordnete Ringscheibe mit zur Spindelachse im Wesentlichen orthogonal verlaufender Scheibenebene mit wenigstens einem Umfangsabschnitt in eine zugehörige Ausnehmung der zweiten Einzelmutter eingedrückt ist. Diese Lösung hat gegenüber dem aus der prioritätsälteren, jedoch nachveröffentlichten Patentanmeldung DE 198 60 643.5 bekannten und die vorstehende Aufgabe ebenfalls lösenden Wälzkörpergewindetrieb den weiteren Vorteil, dass sie für die Anordnung der Ringsscheibe zwischen den beiden Einzelmuttern auch in axialer Richtung nur wenig Bauraum erfordert.

Bei der Montage des erfindungsgemäßen Wälzkörpergewindetriebs kann die drehfeste Verbindung der Ringscheibe mit der zweiten Einzelmutter gemäß einer ersten Verfahrensvariante der letzte Arbeitsgang sein. Hierzu wird die zweite Einzelmutter zunächst durch Verdrehen auf der Gewindespindel in Anlage an die mit der ersten Einzelmutter bereits drehfest verbundene Ringscheibe gebracht. Durch weiteres Verdrehen der beiden Einzelmuttern wird dann das gewünschte Spiel bzw. die gewünschte Vorspannung der beiden Einzelmuttern bezüglich der Gewindespindeln eingestellt. Die einzigen hierbei auftretenden Reibungskräfte zwischen der Ringscheibe und der Mutter rühren dabei von der Vorspannung selbst her. Hat das Spiel bzw. die Vorspannung den gewünschten Wert erreicht, so wird wenigstens ein Umfangsabschnitt der Ringscheibe in eine zugehörige Ausnehmung der zweiten Einzelmutter eingedrückt. Hierdurch erhält man eine sichere drehfeste Verbindung, die eine sofortige Weiterverarbeitung des Wälzkörpergewindetriebs erlaubt. Zudem ist eine spätere unbeabsichtigte Verdrehung der beiden Einzelmuttern relativ zueinander mit hieraus resultierender Verstellung des gewünschten Spiels bzw. der gewünschten Vorspannung zuverlässig ausgeschlossen.

Zur Vereinfachung der zur Montage des erfindungsgemäßen Wälzkörpergewindetriebs erforderlichen Montageschritte kann auch die drehfeste Verbindung der Ringscheibe mit der ersten Einzelmutter durch Eindrücken wenigstens eines Umfangsabschnitts der Ringscheibe in eine zugehörige Ausnehmung der ersten Einzelmutter herbeigeführt werden. Gemäß der vorstehend angesprochenen ersten Verfahrensalternative kann dabei die Ringscheibe vor dem Eindrücken des wenigstens einen Umfangsabschnitts unter Verwendung eines Zentrierdorns relativ zur ersten Einzelmutter zentriert werden.

Grundsätzlich ist es gemäß einer zweiten Verfahrensalternative aber auch möglich, die Ringscheibe mit beiden Einzelmuttern gleichzeitig drehfest zu verbinden, und zwar vorteilhafterweise in beiden Fällen durch Eindrücken jeweils wenigstens eines Umfangsabschnitts der Ringscheibe in zugehörige Ausnehmungen der beiden Einzelmuttern. In diesem Fall ist es zur Vereinfachung der Montage denkbar, an wenigstens einer der Einzelmuttern einen Zentrieransatz zum Zentrieren der Ringscheibe vorzusehen.

Unabhängig von der jeweils zur Montage eingesetzten Verfahrensalternative hat eine Zentrierung der Ringscheibe bezüglich der ersten Einzelmutter bzw. bezüglich beider Einzelmuttern ganz allgemein den Vorteil, die reproduzierbare und präzise Montage des erfindungsgemäßen Wälzkörpergewindetriebs zu erleichtern.

Ein Problem kann sich bei der Montage des erfindungsgemäßen Wälzkörpergewindetriebs allenfalls dann ergeben, wenn bei Erreichen der gewünschten Vorspannung bzw. des gewünschten Spiels der beiden Einzelmuttern zwei Ausnehmungen dieser Einzelmuttern einander in Richtung der Spindelachse genau gegenüber liegen. Die Ringscheibe kann nämlich an einem bestimmten Umfangsabschnitt nur mit einer der beiden Einzelmuttern formschlüssig verbunden werden. Um hier Abhilfe schaffen zu können, wird vorgeschlagen, dass dann, wenn jede der Einzelmuttern mit der Ringscheibe an einer vorbestimmten Anzahl von Umfangsabschnitten verbunden ist, wenigstens eine der Einzelmuttern, vorzugsweise die zweite Einzelmutter, eine größere Anzahl, vorzugsweise mindestens doppelt so viele, Ausnehmungen aufweist, als es der vorbestimmten Anzahl entspricht. Zusätzlich oder alternativ kann darüber hinaus aber auch vorgesehen sein, dass dann, wenn eine Einzelmutter mit wenigstens zwei zur Verbindung mit der Ringscheibe geeigneten Ausnehmungen versehen ist, diese Ausnehmungen über den Umfang der Einzelmutter unregelmäßig verteilt angeordnet sind. Schließlich kann man diesem Problem auch dadurch begegnen, dass man Ringscheiben mit mindestens zwei verschiedenen Dicken bereithält, und dann, wenn man bei einer Scheibendicke feststellt, dass die Ausnehmungen der beiden Einzelmuttern in Gegenüberlage kommen, diese gegen eine Ringscheibe einer anderen Dicke austauscht. Unnötig zu betonen, dass die andere Scheibendicke so gewählt sein muss, dass bei dieser Scheibendicke das Gegenüberlage-Problem nicht auftritt.

Die Ringscheibe besteht bevorzugt aus weichem, d.h. nicht gehärtetem, Stahl und kann daher beispielsweise durch Stanzen aus kostengünstig erhältlichem Stahlblech gefertigt werden. Dies hat den Vorteil, dass die Ringscheibe als billiges Serienteil bei der Demontage des Wälzkörperschraubtriebs bedenkenlos zerstört werden und bei der erneuten Montage der beiden Einzelmuttern durch eine neue Ringscheibe ersetzt werden kann.

Die Einzelmuttern können beispielsweise einsatzgehärtete Einzelmuttern sein, d.h. Einzelmuttern, deren Wälzkörperlauffläche durch Aufkohlen gehärtet ist - und somit einen hohen Kohlenstoff-Gehalt aufweist - und von einem äußeren Mantelbereich aus einem weicheren Stahl mit niedrigem Kohlenstoff-Gehalt umgeben ist. Derartige einsatzgehärtete Einzelmuttern haben den Vorteil, dass der weiche Mantelbereich auch von Endbenutzern in einfacher Weise bearbeitet werden kann. Beispielsweise können in diesen weichen Mantelbereiche auch mit handelsüblichen Werkzeugen Gewindebohrungen eingebracht werden, was einen in hohem Maße flexiblen Einbau der erfindungsgemäßen Wälzkörpergewindetriebe in übergeordnete Strukturen ermöglicht. Überdies können die weichen Bereiche in zugeordnete Ausnehmungen der übergeordneten Struktur eingedrückt werden. Ist zumindest der weiche Mantelbereich zudem aus einem schweißbaren Stahl gefertigt, also beispielsweise aus einem Stahl mit niedrigem Kohlenstoffgehalt, so kann der erfindungsgemäße Wälzkörpergewindetrieb zudem durch Schweißen mit der übergeordneten Struktur verbunden werden. Die Einzelmuttern können jedoch grundsätzlich auch induktionsgehärtet sein. Dieses Härtungsverfahren, bei welchem dem zu härtenden Stahl kein Kohlenstoff zugeführt wird, sondern er lediglich induktiv erwärmt wird, eignet sich insbesondere für den Einsatz bei Einzelmuttern, die insgesamt aus Kohlenstoff-reichen Stahl bestehen.

In Weiterbildung der Erfindung kann sich wenigstens ein in eine zugeordnete Ausnehmung eingedrückter Umfangsabschnitt an den diese Ausnehmung begrenzenden Wandungsfläche der jeweiligen Einzelmutter lediglich in Umfangsrichtung abstützen. Hierdurch können zuverlässig sowohl in axialer Richtung als auch in radialer Richtung wirkende Kräfte vermieden werden, welche einen Einfluss auf die Vorspannung bzw. das Spiel der beiden Einzelmuttern bezüglich der Gewindespindel haben könnten.

Zur Reduzierung der für das Eindrücken erforderlichen Kräfte oder/und zur Ermöglichung einer möglichst großflächigen Anlage des eingedrückten Umfangsabschnitts an den Seitenwandungen der Ausnehmung kann ferner vorgesehen sein, dass der eingedrückte Umfangsabschnitt eingeschnitten ist.

Zur Erhöhung der Stabilität der Gesamtanordnung und somit zur Reduzierung der Gefahr einer Verformung der Muttern, insbesondere in deren einander zugewandten Stirnbereichen, kann vorgesehen sein, dass die wenigstens eine Ausnehmung nach radial innen hin von einem Wandungsabschnitt der zugehörigen Einzelmutter begrenzt ist.

In bestimmten Anwendungsfällen kann es von Vorteil sein, wenn die Ringscheibe mit wenigstens einer der beiden Einzelmuttern zusätzlich verklebt ist, vorzugsweise unter Einsatz eines doppelseitigen Klebebandes. Für diese Anwendung geeignete Klebebänder mit aushärtenden Kunstharzen sind beispielsweise unter der Bezeichnung SCOTCH™ VHB™ erhältlich.

Im Hinblick auf einen möglichst einfachen Aufbau des erfindungsgemäßen Wälzkörpergewindetriebs wird ferner vorgeschlagen, dass die beiden Einzelmutter in Richtung der Spindelachse mittels der Ringscheibe aneinander abgestützt sind. Grundsätzlich ist es jedoch auch denkbar, dass die beiden Einzelmuttern unmittelbar aneinander abgestützt sind.

Wie vorstehend bereits angesprochen worden ist, betrifft die Erfindung ferner ein Verfahren zum Montieren eines erfindungsgemäßen Wälzkörpergewindetriebs, insbesondere Kugelgewindetriebs. Hinsichtlich der Vorteile dieses Verfahrens sowie dessen Ausgestaltungsmöglichkeiten sei auf die vorstehende Diskussion des erfindungsgemäßen Wälzkörpergewindetriebs verwiesen.

Die Erfindung wird im folgenden anhand der beiliegenden Zeichnung an einem Ausführungsbeispiel näher erläutert werden. Es stellt dar:
- Fig. 1: eine perspektivische Explosionsdarstellung eines erfindungsgemäßen Wälzkörpergewindetriebs ;
- Fig. 2: einen Schnitt des Wälzkörpergewindetriebs längs der Linie II-II in Fig. 1; und
- Fig. 3: eine perspektivische Ansicht zur Erläuterung der Montage des erfindungsgemäßen Wälzkörpergewindetriebs.

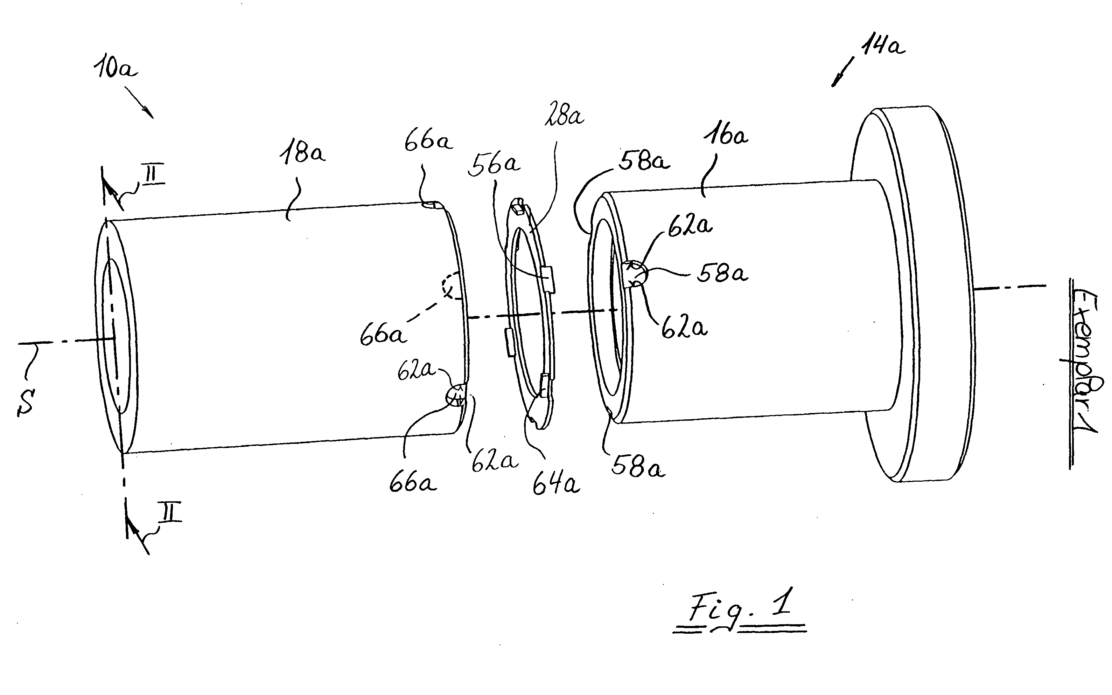

In Fig. 1 und 2 ist ein erfindungsgemäßer Wälzkörpergewindetrieb ganz allgemein mit 10a bezeichnet. Der Wälzkörpergewindetrieb 10a umfasst eine Gewindespindel 12a (siehe Fig. 2) mit einer Spindelachse S sowie eine konzentrisch zur Gewindespindel 12a angeordnete Doppelmutter 14a. Die Doppelmutter 14a umfasst eine erste Einzelmutter 16a und eine zweite Einzelmutter 18a, welche auf eine nachfolgend noch näher zu erläuternde Weise miteinander drehfest verbunden sind.

Wälzkörperlaufbahnen 20a und 22a der beiden Muttern 16a und 18a bilden zusammen mit einer Wälzkörperlaufbahn 24a der Spindel 12a Wälzkörperlaufkanäle für Wälzkörper 26a. In herkömmlicher und daher in den Figuren nicht dargestellter Weise sind die den beiden Muttern 16a und 18a zugeordneten Wälzkörperlaufkanäle über im Mantel der Muttern 16a, 18a gebildete Rückführkanäle in sich geschlossen, so dass die den beiden Muttern 16a bzw. 18a zugeordneten Wälzkörper, im dargestellten Ausführungsbeispiel Kugeln, in diesen Wälzkörperlaufkanälen endlos umlaufen. Auf diese Weise wird eine Drehbewegung der Spindel 12a um die Achse S in eine Linearbewegung der geführten Doppelmutter 14a in Richtung der Achse S umgewandelt.

Insoweit entspricht der erfindungsgemäße Wälzkörpergewindetrieb 10a aus dem Stand der Technik bekannten Wälzkörpergewindetrieben.

Derartige Wälzkörpergewindetriebe werden beispielsweise zum schnellen und genauen Positionieren von Werkzeug- und Werkstückträgern sowie zum Verfahren derselben mit definierten Geschwindigkeiten eingesetzt. Um bei der Umkehr der Bewegungsrichtung der Doppelmutter 14a möglichst hohen Genauigkeitsanforderungen genügen zu können, ist es erforderlich, dass die Doppelmutter 14a auf der Spindel 12a möglichst spielfrei läuft. Hierzu werden die beiden Muttern 16a und 18a bei der Montage auf der Spindel 12a so weit aufeinander zugedreht, bis sie aneinander anliegen. Verdreht man die Muttern 16a und 18a weiter relativ zueinander, so führt dies dazu, dass die Wälzkörper 26a in den Laufbahnen 20a bzw. 22a an einander entgegengesetzten Flankenflächen dieser Laufbahnen 20a bzw. 22a anliegen. Dies hat eine Vorspannung der beiden Muttern 16a und 18a relativ zur Gewindespindel 12a zur Folge. Durch diesen Eingriff der Wälzkörper 26a an unterschiedlichen Flankenflächen der Laufbahnen 20a und 22a wird das Spiel der Doppelmutter 14a bezüglich der Spindel 12a verringert, wenn nicht gar vollständig ausgeschlossen. Damit die vorstehend geschilderte Vorspannung nicht durch eine Relativverdrehung der beiden Muttern 16a, 18a wieder aufgehoben wird, werden diese aneinander drehfest gesichert, und zwar unter Einsatz einer Ringscheibe 28a mit zur Spindelachse S im Wesentlichen orthogonal verlaufender Scheibenebene.

Die Erfindung setzt nun bei der Art und Weise der drehfesten Verbindung dieser Ringscheibe 28a mit den beiden Einzelmuttern 16a und 18a ein. Diese erfolgt nämlich erfindungsgemäß durch Eindrücken bzw. Einstemmen einer Mehrzahl von Umfangsabschnitten 56a der Ringscheibe 28a in Ausnehmungen 58a der ersten Mutter 16a und durch Eindrücken bzw. Einstemmen einer Mehrzahl von Umfangsabschnitten 64a der Ringscheibe 28a in Ausnehmungen 66a der zweiten Mutter 18a. Die Ringscheibe 28a ist hierzu bevorzugt aus einem weichen, d.h. nicht gehärteten und beispielsweise unter Zuhilfenahme entsprechender Abstützmittel und eines Stempels bzw. Stemmeisens verformbaren, Stahl gefertigt.

Um zu vermeiden, dass durch diese Art der drehfesten Verbindung die Vorspannkraft der beiden Muttern 16a und 18a bezüglich der Gewindespindel 12a beeinflusst wird, ist es bevorzugt, wenn sich die Umfangsabschnitte 56a und 64a nicht an den axialen Begrenzungsflächen 60a der Ausnehmungen 58a und 66a abstützen, sondern lediglich an deren Umfangsbegrenzungsflächen 62a. Bei Bedarf können die eingestemmten bzw. eingedrückten Umfangsabschnitte 56a und 64a auch an den Umfangsbegrenzungsflächen 62a entsprechenden Stellen eingeschnitten sein, was jedoch weder in Fig. 1 noch in Fig. 2 dargestellt ist.

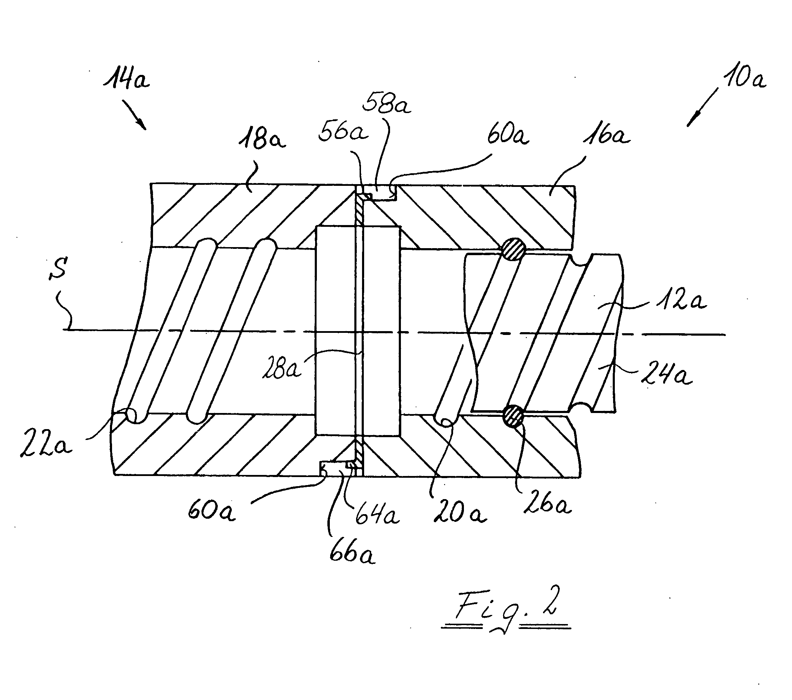

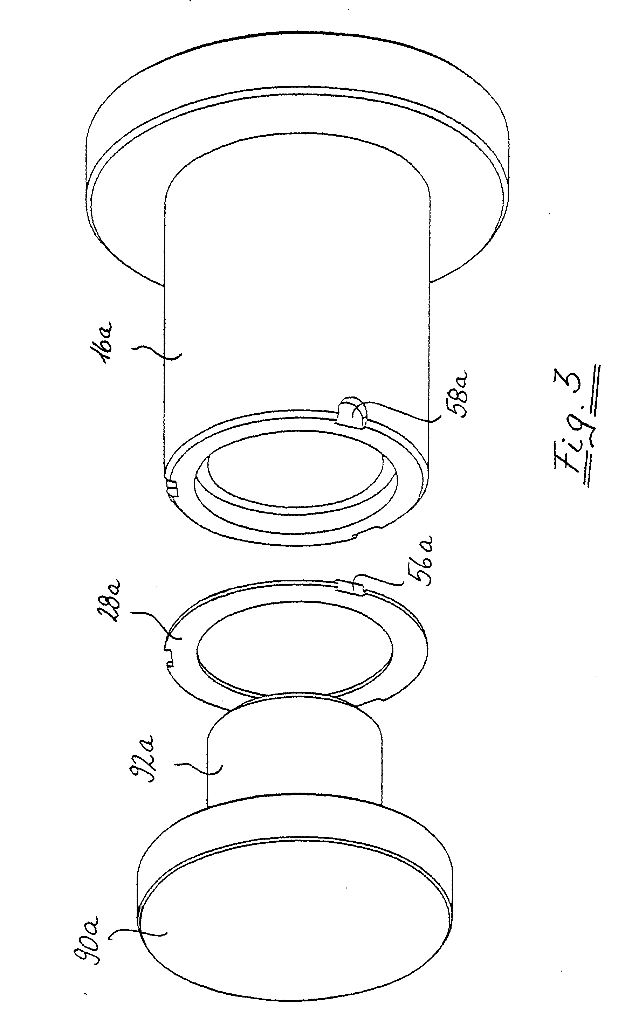

Bei der Montage kann gemäß Fig. 3 die Ringscheibe 28a beispielsweise zunächst auf den Zentrierdorn 92a eines Zentrierwerkzeugs 90a aufgesteckt werden. Anschließend wird dieser Zentrierdorn 92a in die erste Mutter 16a von deren die Ausnehmungen 58a aufweisendem Endbereich her eingeführt, woraufhin die Umfangsabschnitte 56a in die Ausnehmungen 58a eingedrückt bzw. eingestemmt werden können. Auf diese Weise erhält man eine im Umfangsrichtung formschlüssige, drehfeste und vor allem bezüglich der Spindelachse S zentrierte Verbindung der Ringscheibe 28a mit der ersten Mutter 16a. Die weitere Verbindung der so erhaltenen Einheit 16a/28a mit der zweiten Mutter 18a kann nach Aufdrehen dieser Einheit auf die Gewindespindel 12a und Einstellung des gewünschten Spiels bzw. der gewünschten Vorspannung zwischen den beiden Muttern 16a und 18a in analoger Weise erfolgen. Die Zentrierung der zweiten Mutter 18a relativ zu der Einheit 16a/28a und relativ zur Spindelachse S wird dabei durch die Gewindespindel 12a sichergestellt.

Bei der vorstehend erläuterten Montage kann leider nicht ausgeschlossen werden, dass die gewünschte Vorspannung bzw. das gewünschte Spiel genau dann erreicht wird, wenn sich die Ausnehmungen 58a der ersten Mutter 16a und die Ausnehmungen 66a der zweiten Mutter 18a in Richtung der Spindelachse S genau gegenüber liegen. Dies stellt insofern ein Problem dar, als die Ringscheibe 28a an einem bestimmten Umfangsabschnitt nur mit einer der beiden Einzelmuttern 16a oder 18a formschlüssig verbunden werden kann. Um hier Abhilfe schaffen zu können, ist erfindungsgemäß wenigstens eine der Muttern mit einer größeren Anzahl von Ausnehmungen versehen als die jeweils andere Mutter. Im dargestellten Ausführungsbeispiel verfügt die zweite Mutter 18a über doppelt so viele Ausnehmungen 66a, wie die erste Mutter 16a Ausnehmungen 58a hat. In Fig. 1 ist lediglich eine der zusätzlichen Ausnehmungen 66a gestrichelt angedeutet. Zusätzlich oder alternativ können die Ausnehmungen wenigstens einer der Muttern 16a, 18a über den Umfang dieser Mutter unregelmäßig verteilt angeordnet sein.

Die Doppelmutter 14a kann auf der Gewindespindel 12a nicht zerstörungsfrei demontiert werden, da keine der beiden Einzelmuttern 16a und 18a aufgrund des formschlüssigen Eingriffs der Ansätze 56a, 64a in die Ausnehmungen 58a, 66a relativ zu der Ringscheibe 28a verdreht werden kann. Um den Wälzkörpergewindetrieb 10a auf der Spindel 12a demontieren zu können, müssten daher die Ansätze 56a oder 64a auf wenigstens einer der Seiten der Ringscheibe zerstört werden.

Einfacher ist jedoch die Demontage der Doppelmutter 14a unter Verwendung einer Hilfsspindel mit glatter Oberfläche, welche man anstelle der Gewindespindel 12a in die Doppelmutter 14a eindreht. Befindet sich die Doppelmutter 12a auf dieser glatten Hilfsspindel, so können die beiden Einzelmuttern 16a und 18a ohne weiteres in axialer Richtung, d.h. in Richtung der Spindelachse S, voneinander und von der Ringscheibe 28a getrennt werden. Diese Art der Demontage hat zudem den Vorteil, dass die Ringscheibe 28a nicht zerstört zu werden braucht und bei der erneuten Montage wieder verwendet werden kann.

## Patentansprüche

1. Wälzkörpergewindetrieb (10a), insbesondere Kugelgewindetrieb, umfassend:
- eine Gewindespindel (12a) mit einer Spindelachse (S), und
- eine auf der Gewindespindel (12a) laufende Doppelmutter (14a) mit zwei voneinander gesondert ausgebildeten Einzelmuttern (16a, 18a), welche in Richtung der Spindelachse (S) im Wesentlichen starr miteinander verbunden sind,
wobei die beiden Einzelmuttern (16a, 18a) zur Einstellung eines gewünschten Spiels bzw. einer gewünschten Vorspannung bezüglich der Gewindespindel (12a) kontinuierlich relativ zueinander um die Spindelachse (S) verdrehbar und in einer beliebigen dem gewünschten Spiel bzw. der gewünschten Vorspannung entsprechenden Relativdrehstellung festlegbar sind,
**dadurch gekennzeichnet, dass** eine mit einer ersten (16a) der beiden Einzelmuttern verbundene, zwischen den beiden Einzelmuttern angeordnete Ringscheibe (28a) mit zur Spindelachse (S) im Wesentlichen orthogonal verlaufender Scheibenebene mit wenigstens einem Umfangsabschnitt (64a) in eine zugehörige Ausnehmung (66a) der zweiten Einzelmutter (18a) eingedrückt ist.

2. Wälzkörpergewindetrieb nach Anspruch 1,
**dadurch gekennzeichnet, dass** die Ringscheibe (28a) auch mit der ersten Einzelmutter (16a) durch Eindrücken wenigstens eines Umfangsabschnitts (56a) in eine zugehörige Ausnehmung (58a) der ersten Einzelmutter (16a) verbunden ist.

3. Wälzkörpergewindetrieb nach Anspruch 1 oder 2,
**dadurch gekennzeichnet, dass** sich wenigstens ein in eine zugeordnete Ausnehmung (58a, 66a) eingedrückter Umfangsabschnitt (56a, 64a) an den diese Ausnehmung (58a, 66a) begrenzenden Wandungsflächen lediglich in Umfangsrichtung (62a) abstützt.

4. Wälzkörpergewindetrieb nach einem der Ansprüche 1 bis 3,
**dadurch gekennzeichnet, dass** wenigstens ein in eine zugeordnete Ausnehmung (58a, 66a) eingedrückter Umfangsabschnitt (56a, 64a) eingeschnitten ist.

5. Wälzkörpergewindetrieb nach einem der Ansprüche 1 bis 4,
**dadurch gekennzeichnet, dass** die wenigstens eine Ausnehmung (58a, 66a) nach radial innen hin von einem Wandungsabschnitt der zugehörigen Einzelmutter (16a, 18a) begrenzt ist.

6. Wälzkörpergewindetrieb nach einem der Ansprüche 1 bis 5,
**dadurch gekennzeichnet, dass** dann, wenn jede der Einzelmuttern (16a, 18a) mit der Ringscheibe (28a) an einer vorbestimmten Anzahl von Umfangsabschnitten (56a, 64a) verbunden ist, wenigstens eine der Einzelmuttern, vorzugsweise die zweite Einzelmutter (18a), eine größere Anzahl, vorzugsweise mindestens doppelt so viele, Ausnehmungen (66a) aufweist, als es der vorbestimmten Anzahl entspricht.

7. Wälzkörpergewindetrieb nach einem der Ansprüche 1 bis 6,
**dadurch gekennzeichnet, dass** dann, wenn eine Einzelmutter (16a, 18a) mit wenigstens zwei zur Verbindung mit der Ringscheibe (28a) geeigneten Ausnehmungen (58a, 66a) versehen ist, diese Ausnehmungen über den Umfang der Einzelmutter (16a, 18a) unregelmäßig verteilt angeordnet sind.

8. Wälzkörpergewindetrieb nach einem der Ansprüche 1 bis 7,
**dadurch gekennzeichnet, dass** die beiden Einzelmuttern (16, 18a) in Richtung der Spindelachse (S) mittels der Ringscheibe (28a) aneinander abgestützt sind.

9. Verfahren zum Montieren eines Wälzkörpergewindetriebs (10a), insbesondere Kugelgewindetriebs, nach einem der vorhergehenden Ansprüche, bei welchem die beiden Einzelmuttern (16a, 18a) zur Einstellung eines gewünschten Spiels bzw. einer gewünschten Vorspannung durch Verdrehen auf der Gewindespindel (12a) in gegenseitige Anlage gebracht und in einer dem gewünschten Spiel bzw. der gewünschten Vorspannung entsprechenden Relativdrehstellung drehfest miteinander verbunden werden,
**dadurch gekennzeichnet, dass** eine mit einer ersten (16a) der beiden Einzelmuttern verbundene, zwischen den beiden Einzelmuttern angeordnete Ringscheibe (28a) mit zur Spindelachse (S) im Wesentlichen orthogonal verlaufender Scheibenebene zur Fixierung der Relativdrehstellung der beiden Einzelmuttern (16a, 18a) mit wenigstens einem Umfangsabschnitt (64a) in eine zugehörige Ausnehmung (66a) der zweiten Einzelmutter (18a) eingedrückt wird.

10. Verfahren nach Anspruch 9,
**dadurch gekennzeichnet, dass** auch die Verbindung der Ringscheibe (28a) mit der ersten Einzelmutter (16a) durch Eindrücken wenigstens eines Umfangsabschnitts (56a) der Ringscheibe in eine zugehörige Ausnehmung (58a) der ersten Einzelmutter (16a) hergestellt wird.

11. Verfahren nach Anspruch 10,
**dadurch gekennzeichnet, dass** die Ringscheibe (28a) vor dem Eindrücken des wenigstens einen Umfangsabschnitts (56a) unter Verwendung eines Zentrierdorns (92a) relativ zur ersten Einzelmutter (16a) zentriert wird.

12. Verfahren nach einem der Ansprüche 9 bis 11,
**dadurch gekennzeichnet, dass** man wenigstens zwei unterschiedlich dicke Ringscheiben (28a) bereithält, und dann, wenn man bei einer der Ringscheiben feststellt, dass die Ausnehmungen (58a, 66a) der beiden Einzelmuttern (14a, 16a) in Gegenüberlage kommen, diese gegen eine Ringscheibe einer anderen Dicke austauscht.

## Claims

1. Rolling-body screw drive (10a), in particular a ball screw drive, comprising:
- a threaded spindle (12a) with a spindle axis (S), and
- a double nut (14a) which runs on the threaded spindle (12a) and has two separately formed individual nuts (16a, 18a) which are connected essentially rigidly to one another in the direction of the spindle axis (S),
it being the case that, for setting a desired level of play or a desired prestressing in relation to the threaded spindle (12a), the two individual nuts (16a, 18a) can be rotated continuously relative to one another about the spindle axis (S) and can be secured in a desired rotary position relative to one another corresponding to the desired level of play or the desired prestressing,
**characterized in that** an annular disc (28a), which is connected to a first (16a) of the two individual nuts, is arranged between the two individual nuts and has its disc plane running essentially orthogonally to the spindle axis (S), is pressed, by way of at least one circumferential section (64a) into an associated recess (66a) of the second individual nut (18a).

2. Rolling-body screw drive according to Claim 1, **characterized in that** the annular disc (28a) is also connected to the first individual nut (16a) by virtue of at least one circumferential section (56a) being pressed into an associated recess (58a) of the first individual nut (16a).

3. Rolling-body screw drive according to Claim 1 or 2, **characterized in that** at least one circumferential section (56a, 64a) pressed into an associated recess (58a, 66a) is supported merely in the circumferential direction (62a) on the wall surfaces bounding said recess (58a, 66a).

4. Rolling-body screw drive according to one of Claims 1 to 3, **characterized in that** at least one circumferential section (56a, 64a) pressed into an associated recess (58a, 66a) is indented.

5. Rolling-body screw drive according to one of Claims 1 to 4, **characterized in that** the at least one recess (58a, 66a) is bounded in a radially inward direction by a wall section of the associated individual nut (16a, 18a).

6. Rolling-body screw drive according to one of Claims 1 to 5, **characterized in that**, when each of the individual nuts (16a, 18a) is connected to the annular disc (28a) at a predetermined number of circumferential sections (56a, 64a), at least one of the individual nuts, preferably the second individual nut (18a), has a larger number, preferably at least double the number, of recesses (66a) than corresponds to the predetermined number.

7. Rolling-body screw drive according to one of Claims 1 to 6, **characterized in that**, when an individual nut (16a, 18a) is provided with at least two recesses (58a, 66a) suitable for connection to the annular disc (28a), said recesses are distributed irregularly over the circumference of the individual nut (16a, 18a).

8. Rolling-body screw drive according to one of Claims 1 to 7, **characterized in that** the two individual nuts (16a, 18a) are supported on one another in the direction of the spindle axis (S) by means of the annular disc (28a).

9. Method of assembling a rolling-body screw drive (10a), in particular ball screw drive, according to one of the preceding claims, in which method, for setting a desired level of play or a desired prestressing, the two individual nuts (16a, 18a) are brought into mutual abutment by rotation on the threaded spindle (12a) and are connected to one another in a rotationally fixed manner in a rotary position relative to one another corresponding to the desired level of play or the desired prestressing, **characterized in that**, for fixing the rotary position of the two individual nuts (16a, 18a) relative to one another, an annular disc (28a), which is connected to a first (16a) of the two individual nuts, is arranged between the two individual nuts and has its disc plane running essentially orthogonally to the spindle axis (S), is pressed, by way of at least one circumferential section (64a), into an associated recess (66a) of the second individual nut (18a).

10. Method according to Claim 9, **characterized in that** the connection of the annular disc (28a) to the first individual nut (16a) is also produced by virtue of at least one circumferential section (56a) of the annular disc being pressed into an associated recess (58a) of the first individual nut (16a).

11. Method according to Claim 10, **characterized in that**, before the at least one circumferential section (56a) is pressed in, the annular disc (28a) is centred relative to the first individual nut (16a) using a centring pin (92a).

12. Method according to one of Claims 9 to 11, **characterized in that** at least two annular discs (28a) of different thicknesses are provided and, when it is established in relation to one of the annular discs that the recesses (58a, 66a) of the two individual nuts (14a, 16a) are located opposite one another, said annular disc is exchanged for an annular disc of a different thickness.

## Revendications

1. Élément fileté (10a) à éléments de roulement, en particulier vis à billes, comprenant :
- une broche filetée (12a) avec un axe de broche (S), et
- un double écrou (14a) circulant sur la broche filetée (12a) avec deux écrous distincts (16a, 18a) réalisés séparément l'un de l'autre, qui sont reliés ensemble pour l'essentiel rigidement dans la direction de l'axe de broche (S),
les deux écrous distincts (16a, 18a) pouvant tourner continûment l'un par rapport à l'autre autour de l'axe de broche (S) afin d'ajuster un jeu souhaité ou une précontrainte souhaitée et pouvant être immobilisés dans une position de rotation relative quelconque correspondant au jeu souhaité ou à la précontrainte souhaitée,
**caractérisé en ce qu'**un disque annulaire (28a) relié à un premier (16a) des deux écrous distincts, placé entre les deux écrous distincts et ayant un plan de disque sensiblement orthogonal à l'axe, de broche (S) est enfoncé avec au moins une section de circonférence (64a) dans un évidement associé (66a) du deuxième écrou distinct (18a).

2. Élément fileté à éléments de roulement selon la revendication 1, **caractérisé en ce que** le disque annulaire (28a) est également relié au premier écrou distinct (16a) par enfoncement d'au moins une section de circonférence (56a) dans un évidement associé (58a) du premier écrou distinct (16a).

3. Élément fileté à éléments de roulement selon la revendication 1 ou 2, **caractérisé en ce qu'**au moins une section de circonférence (56a, 64a) enfoncée dans un évidement (58a, 66a) associé s'appuie seulement dans la direction circonférentielle (62a) sur les surfaces de paroi-délimitant cet évidement (58a, 66a).

4. Élément fileté à éléments de roulement selon l'une des revendications 1 à 3, **caractérisé en ce qu'**au moins une section de circonférence (56a, 64a) enfoncée dans un évidement (58a, 66a) associé est entaillée.

5. Élément fileté à éléments de roulement selon l'une des revendications 1 à 4, **caractérisé en ce que** l'évidement (58a, 66a) au nombre d'au moins un est limité vers l'intérieur radialement par une section de paroi de l'écrou distinct (16a, 18a) associé.

6. Élément fileté à éléments de roulement selon l'une des revendications 1 à 5, **caractérisé en ce que**, quand chacun des écrous distincts (16a, 18a) est relié au disque annulaire (28a) sur un nombre prédéterminé de sections de circonférence (56a, 64a), au moins l'un des écrous distincts, de préférence le deuxième écrou distinct (18a) présente un plus grand nombre, de préférence au moins le double, d'évidements (66a) que le nombre prédéterminé.

7. Élément fileté à éléments de roulement selon l'une des revendications 1 à 6, **caractérisé en ce que**, quand un écrou distinct (16a, 18a) est muni d'au moins deux évidements (58a, 66a) adaptés pour la liaison avec le disque annulaire (28a), ces évidements sont répartis irrégulièrement sur la circonférence des écrous distincts (16a, 18a).

8. Élément fileté à éléments de roulement selon l'une des revendications 1 à 7, **caractérisé en ce que** les deux écrous distincts (16, 18a) sont appuyés l'un contre l'autre dans la direction de l'axe de broche (S) au moyen du disque annulaire (28a).

9. Procédé de montage d'une élément fileté à éléments de roulement (10a), en particulier d'une vis à billes, selon l'une des revendications précédentes, dans lequel les deux écrous distincts (16a, 18a) sont mis en appui mutuel pour ajuster un jeu souhaité ou une précontrainte souhaitée par rotation sur la broche filetée (12a) et sont reliés entre eux de manière solidaire en rotation dans une position de rotation relative correspondant au jeu souhaité ou à la précontrainte souhaitée,
**caractérisé en ce qu'**un disque annulaire (28a) relié à un premier (16a) des deux écrous distincts, placé entre les deux écrous distincts et ayant un plan de disque sensiblement orthogonal à l'axe de broche (S) est enfoncé avec au moins une section de circonférence (64a) dans un évidement associé (66a) du deuxième écrou distinct (18a) pour fixer la position de rotation relative des deux écrous distincts (16a, 18a).

10. Procédé selon la revendication 9, **caractérisé en ce que** la liaison du disque annulaire (28a) avec le premier écrou distinct (16a) est également établie en enfonçant au moins une section de circonférence (56a) du disque annulaire dans un évidement associé (58a) du premier écrou distinct (16a).

11. Procédé selon la revendication 10, **caractérisé en ce que** le disque annulaire (28a) est centré par rapport au premier écrou distinct (16a) en employant un mandrin de centrage (92a) avant l'enfoncement de la section de circonférence (56a) au nombre d'au moins une.

12. Procédé selon l'une des revendications 9 à 11, **caractérisé en ce qu'**on prépare au moins deux disques annulaires (28a) d'épaisseurs différentes puis, quand on constate avec l'un des disques annulaires que les évidements (58a, 66a) des deux écrous distincts (14a, 16a) se superposent, on le remplace par un disque annulaire d'une autre épaisseur.
